# FASCICULE DE BREVET EUROPEEN

(11) **EP 4 306 011 B1**
(45) Date de publication et mention de la délivrance du brevet: **25.06.2025**
(21) Numéro de dépôt: 23183266.8
(22) Date de dépôt: 04.07.2023
(51) Int. Cl.: A47J 27/21, A47J 31/58

(54) **BOUILLOIRE COMPRENANT UN COUVERCLE ÉQUIPÉ D'UN DISPOSITIF D'ÉVACUATION DE VAPEUR**
WASSERKOCHER MIT DECKEL, DER MIT EINER DAMPFABFÜHRVORRICHTUNG AUSGESTATTET IST
KETTLE COMPRISING A LID PROVIDED WITH A VAPOUR DISCHARGE DEVICE

(30) Priorité: 11.07.2022 FR 2207091
(43) Date de publication de la demande: 17.01.2024
(73) Titulaire: SEB S.A., 69130 Ecully (FR)
(72) Inventeur: ALLEMAND, Bernard, 69134 ECULLY CEDEX (FR); SMAL, Chloé, 69134 ECULLY CEDEX (FR); MANSEAU, Charles, 69134 ECULLY CEDEX (FR)
(74) Mandataire: Germain Maureau

(56) Documents cités:
- CN-A- 104 127 125
- CN-A- 104 138 203
- CN-A- 105 581 649
- GB-A- 2 488 204

## Description

### Domaine technique

La présente invention concerne le domaine des appareils de chauffage de liquides, et en particulier des bouilloires électriques.

### Etat de la technique

Le document CN104138203 divulgue une bouilloire électrique comprenant :
- un contenant présentant un axe longitudinal central configuré pour s'étendre sensiblement verticalement lorsque le contenant repose sur une surface horizontale, le contenant délimitant un volume interne destiné à contenir de l'eau et dans lequel l'eau est destinée à être chauffée et notamment portée à ébullition,
- une poignée de préhension fixée au contenant,
- un bec verseur situé à l'opposé de la poignée de préhension par rapport à l'axe longitudinal central du contenant,
- un couvercle configuré pour fermer le contenant, le couvercle comprenant une face inférieure configurée pour être située en regard du volume interne, et
- un dispositif d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne.

Le dispositif d'évacuation de vapeur comprend notamment :
- un premier orifice d'admission de vapeur et un deuxième orifice d'admission de vapeur qui sont prévus sur le couvercle et qui débouchent dans la face inférieure du couvercle, les premier et deuxième orifices d'admission de vapeur étant configurés être reliés fluidiquement au volume interne et pour être disposés de part et d'autre d'un plan vertical médian de la bouilloire qui passe par le bec verseur et la poignée de préhension,
- un premier tube d'écoulement de vapeur comprenant une première ouverture d'entrée de vapeur reliée fluidiquement au premier orifice d'admission de vapeur et une première ouverture de sortie de vapeur, et un deuxième tube d'écoulement de vapeur comprenant une deuxième ouverture d'entrée de vapeur reliée fluidiquement au deuxième orifice d'admission de vapeur et une deuxième ouverture de sortie de vapeur, et
- un organe de collecte de vapeur relié fluidiquement aux première et deuxième ouvertures de sortie de vapeur et pourvu d'une ouverture d'évacuation de vapeur configurée pour permettre une évacuation de la vapeur contenue dans le volume interne du contenant à l'extérieur du couvercle.

La bouilloire est configurée de telle sorte que, lorsque la bouilloire est renversée et que la poignée de préhension et un premier côté latéral du contenant reposent de manière stable sur une surface horizontale (ce qui correspond à une première position renversée stable de la bouilloire), le premier orifice d'admission de vapeur est situé au-dessus du niveau d'eau dans le volume interne, et de telle sorte que, lorsque la bouilloire est renversée et que la poignée de préhension et un deuxième côté latéral du contenant reposent de manière stable sur une surface horizontale (ce qui correspond à une deuxième position renversée stable de la bouilloire), le deuxième orifice d'admission de vapeur est situé au-dessus du niveau d'eau dans le volume interne.

Une telle configuration de la bouilloire réduit les risques d'écoulement d'eau bouillante hors de la bouilloire via l'ouverture d'évacuation de vapeur, lorsque la bouilloire est basculée sur le côté.

Cependant, en raison des vagues engendrées dans le volume interne du contenant lors d'un basculement de la bouilloire, de l'eau est susceptible de remonter, du fait de son inertie, dans le tube d'écoulement de vapeur qui est relié fluidiquement à l'orifice d'admission de vapeur situé en dessous du niveau d'eau dans le contenant et de s'écouler au-delà d'un point haut dudit tube d'écoulement de vapeur, ce qui est susceptible d'induire un écoulement d'eau bouillante hors de la bouilloire précitée lorsque celle-ci est renversée. Or, un tel écoulement d'eau bouillante hors de la bouilloire est susceptible de provoquer des brûlures à un utilisateur.

Pour palier un tel inconvénient, il pourrait être envisagé d'équiper le couvercle avec un ou plusieurs clapets antiretours, tels que des clapets à bille, configurés pour empêcher un écoulement d'eau à travers les premier et deuxième tubes d'écoulement de vapeur en cas de renversement de la bouilloire. Toutefois, de tels clapets antiretours complexifient la bouilloire et augmentent sensiblement les coûts de fabrication de cette dernière.

Une bouilloire comprenant les caractéristiques techniques du préambule de la revendication 1 est décrite dans le document CN105581649 A.

### Résumé de l'invention

La présente invention vise à remédier à tout ou partie de ces inconvénients.

Le problème technique à la base de l'invention consiste notamment à fournir une bouilloire qui soit de structure simple et économique, tout en présentant une grande sécurité d'utilisation.

A cet effet, la présente invention concerne une bouilloire, et en particulier une bouilloire électrique, comprenant :
- un contenant présentant un axe longitudinal central configuré pour s'étendre sensiblement verticalement lorsque le contenant repose sur une surface horizontale, le contenant délimitant un volume interne destiné à contenir de l'eau et dans lequel l'eau est destinée à être chauffée et notamment portée à ébullition,
- une poignée de préhension par exemple fixée au contenant,
- un bec verseur configuré pour être situé à l'opposé de la poignée de préhension par rapport à l'axe longitudinal central du contenant,
- un couvercle configuré pour fermer le contenant, le couvercle comprenant une face inférieure configurée pour être située en regard du volume interne, et
- un dispositif d'évacuation de vapeur configuré pour convoyer, à l'extérieur du volume interne et par exemple vers l'extérieur de la bouilloire ou vers la poignée de préhension, de la vapeur générée dans le volume interne lors d'une ébullition de l'eau contenue dans le volume interne, le dispositif d'évacuation de vapeur comprenant un premier orifice d'admission de vapeur et un deuxième orifice d'admission de vapeur qui sont prévus sur le couvercle et qui débouchent dans la face inférieure du couvercle, les premier et deuxième orifices d'admission de vapeur étant configurés pour être reliés fluidiquement au volume interne délimité par le contenant et par exemple pour être situés au-dessus d'un niveau de remplissage maximal du contenant, et pour être disposés de part et d'autre d'un plan vertical médian de la bouilloire qui passe par le bec verseur et la poignée de préhension.

Le dispositif d'évacuation de vapeur comprend en outre :
- un premier circuit d'écoulement de vapeur délimité par le couvercle, le premier circuit d'écoulement de vapeur comprenant un premier canal d'écoulement de vapeur relié fluidiquement au premier orifice d'admission de vapeur et une première chambre de détente reliée fluidiquement au premier canal d'écoulement de vapeur et située en aval du premier canal d'écoulement de vapeur,
- un deuxième circuit d'écoulement de vapeur délimité par le couvercle, le deuxième circuit d'écoulement de vapeur comprenant un deuxième canal d'écoulement de vapeur relié fluidiquement au deuxième orifice d'admission de vapeur et une deuxième chambre de détente reliée fluidiquement au deuxième canal d'écoulement de vapeur et située en aval du deuxième canal d'écoulement de vapeur, et
- au moins une ouverture d'évacuation de vapeur prévue sur le couvercle et reliée fluidiquement aux première et deuxième chambres de détente, l'au moins une ouverture d'évacuation de vapeur étant configurée pour permettre une évacuation de la vapeur contenue dans le couvercle à l'extérieur du couvercle.

La présence des première et deuxième chambres de détente, situées respectivement en aval des premier et deuxième canaux d'écoulement de vapeur, permet, en cas de renversement de la bouilloire, de réduire considérablement l'inertie de l'eau s'écoulant dans le circuit d'écoulement de vapeur relié à l'orifice d'admission de vapeur situé en dessous du niveau d'eau dans le contenant, et donc de réduire considérablement les risques que de l'eau s'écoule au-delà d'un point haut dudit circuit d'écoulement de vapeur. Ainsi, la bouilloire selon la présente invention permet d'éviter ou du moins de limiter considérablement les risques d'écoulement d'eau bouillante hors de la bouilloire en cas de renversement de cette dernière.

La bouilloire peut en outre présenter une ou plusieurs des caractéristiques suivantes, prises seules ou en combinaison.

Selon un mode de réalisation de l'invention, les premier et deuxième orifices d'admission de vapeur sont situés dans une moitié avant de la face inférieure du couvercle.

Selon un mode de réalisation de l'invention, le premier orifice d'admission de vapeur débouche dans une paroi de fond du premier canal d'écoulement de vapeur.

Selon un mode de réalisation de l'invention, le premier canal d'écoulement de vapeur comporte une première portion d'extrémité dans laquelle débouche le premier orifice d'admission de vapeur et une deuxième portion d'extrémité débouchant dans la première chambre de détente.

Selon un mode de réalisation de l'invention, le deuxième orifice d'admission de vapeur débouche dans une paroi de fond du deuxième canal d'écoulement de vapeur.

Selon un mode de réalisation de l'invention, le deuxième canal d'écoulement de vapeur comporte une première portion d'extrémité dans laquelle débouche le deuxième orifice d'admission de vapeur et une deuxième portion d'extrémité débouchant dans la deuxième chambre de détente.

Selon un mode de réalisation de l'invention, les premier et deuxième orifices d'admission de vapeur débouchent dans la face inférieure du couvercle à proximité du bord périphérique de la face inférieure du couvercle. Une telle disposition des premier et deuxième orifices d'admission de vapeur limite encore les risques d'écoulement d'eau bouillante hors de la bouilloire en cas de renversement de cette dernière.

Selon un mode de réalisation de l'invention, le premier canal d'écoulement de vapeur présente une section de passage qui est sensiblement constante le long de la longueur du premier canal d'écoulement de vapeur, et le deuxième canal d'écoulement de vapeur présente une section de passage qui est sensiblement constante le long de la longueur du canal tube d'écoulement de vapeur.

Selon un mode de réalisation de l'invention, la première chambre de détente comporte au moins une portion de chambre présentant une section de passage supérieure à au moins deux fois la section de passage maximale du premier canal d'écoulement de vapeur, et la deuxième chambre de détente comporte au moins une portion de chambre présentant une section de passage supérieure à au moins deux fois la section de passage maximale du deuxième canal d'écoulement de vapeur. Une telle configuration des première et deuxième chambres de détente limite encore les risques d'écoulement d'eau bouillante hors de la bouilloire en cas de renversement de cette dernière.

Selon un mode de réalisation de l'invention, la première chambre de détente présente un volume interne supérieur au volume interne du premier canal d'écoulement de vapeur, et par exemple supérieur à au moins trois fois le volume interne du premier canal d'écoulement de vapeur, et la deuxième chambre de détente présente un volume interne supérieur au volume interne du deuxième canal d'écoulement de vapeur, et par exemple supérieur à au moins trois fois le volume interne du deuxième canal d'écoulement de vapeur. Une telle configuration des première et deuxième chambres de détente limite encore les risques d'écoulement d'eau bouillante hors de la bouilloire en cas de renversement de cette dernière.

Selon un mode de réalisation de l'invention, le dispositif d'évacuation de vapeur comprend en outre un canal de sortie de vapeur délimité par le couvercle, le canal de sortie de vapeur étant relié fluidiquement aux première et deuxième chambres de détente et étant situé en aval des première et deuxième chambres de détente, l'au moins une ouverture d'évacuation de vapeur étant reliée fluidiquement au canal de sortie de vapeur.

Selon un mode de réalisation de l'invention, le canal de sortie de vapeur s'étend le long d'un bord périphérique du couvercle.

Selon un mode de réalisation de l'invention, l'au moins une ouverture d'évacuation de vapeur débouche dans le canal de sortie de vapeur.

Selon un mode de réalisation de l'invention, les premier et deuxième circuits d'écoulement de vapeur se rejoignent au niveau d'une zone de jonction, le canal de sortie de vapeur étant relié fluidiquement aux premier et deuxième circuits d'écoulement de vapeur au niveau de la zone de jonction.

Selon un mode de réalisation de l'invention, la zone de jonction est située à proximité d'un bord périphérique de la face inférieure du couvercle.

Selon un mode de réalisation de l'invention, le premier circuit d'écoulement de vapeur comporte un canal de liaison configuré pour relier fluidiquement la première chambre de détente au canal de sortie de vapeur.

Selon un mode de réalisation de l'invention, les premier et deuxième canaux d'écoulement de vapeur s'étendent en direction d'une partie arrière du couvercle, et par exemple à l'opposé du bec verseur.

Selon un mode de réalisation de l'invention, les premier et deuxième canaux d'écoulement de vapeur convergent l'un vers l'autre en direction d'une partie arrière du couvercle.

Selon un mode de réalisation de l'invention, chacun des premier et deuxième canaux d'écoulement de vapeur est sensiblement rectiligne.

Selon un mode de réalisation de l'invention, le premier canal d'écoulement de vapeur et la première chambre de détente comportent des parois de fond qui sont configurées pour être inclinées par rapport à l'horizontale lorsque le contenant repose sur une surface horizontale et qui sont configurées pour guider de l'eau contenue dans le premier canal d'écoulement de vapeur et la première chambre de détente vers le premier orifice d'admission de vapeur, et le deuxième canal d'écoulement de vapeur et la deuxième chambre de détente comportent des parois de fond qui sont configurées pour être inclinées par rapport à l'horizontale lorsque le contenant repose sur une surface horizontale et qui sont configurées pour guider de l'eau contenue dans le deuxième canal d'écoulement de vapeur et la deuxième chambre de détente vers le deuxième orifice d'admission de vapeur. Une telle configuration du couvercle permet d'éviter une accumulation d'eau et une stagnation d'eau dans le couvercle.

Selon un mode de réalisation de l'invention, le canal de liaison et le canal de sortie de vapeur comportent des parois de fond qui sont configurées pour être inclinées par rapport à l'horizontale lorsque le contenant repose sur une surface horizontale et qui sont configurées pour guider de l'eau contenue dans le canal de liaison et le canal de sortie de vapeur vers la deuxième chambre de détente. Une telle configuration du couvercle permet également d'éviter une accumulation d'eau et une stagnation d'eau dans le couvercle.

Selon un mode de réalisation de l'invention, la bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne et le deuxième orifice d'admission de vapeur est situé en dessous du niveau d'eau dans le volume interne, et de telle sorte que, lorsque la bouilloire est renversée et que la poignée de préhension et un deuxième côté latéral du contenant reposent de manière stable sur une surface horizontale, le premier orifice d'admission de vapeur est situé en dessous du niveau d'eau dans le volume interne et le deuxième orifice d'admission de vapeur est situé au-dessus du niveau d'eau dans le volume interne.

Selon un mode de réalisation de l'invention, la première chambre de détente comporte une première ouverture de sortie configurée pour être située en un point haut du premier circuit d'écoulement de vapeur lorsque la bouilloire est renversée et que la poignée de préhension et le deuxième côté latéral du contenant reposent de manière stable sur une surface horizontale, et la deuxième chambre de détente comporte une deuxième ouverture de sortie configurée pour être située en un point haut du deuxième circuit d'écoulement de vapeur lorsque la bouilloire est renversée et que la poignée de préhension et le premier côté latéral du contenant reposent de manière stable sur une surface horizontale. Une telle configuration des première et deuxième chambres de détente limite encore les risques d'écoulement d'eau bouillante hors de la bouilloire en cas de renversement de cette dernière.

Selon un mode de réalisation de l'invention, la première ouverture de sortie est située à proximité du deuxième orifice d'admission de vapeur, et la deuxième ouverture de sortie est située à proximité du premier orifice d'admission de vapeur. Une telle disposition des première et deuxième ouvertures de sortie limite encore les risques d'écoulement d'eau bouillante hors de la bouilloire en cas de renversement de cette dernière.

Selon un mode de réalisation de l'invention, les première et deuxième ouvertures de sortie sont configurées pour être disposées de part et d'autre du plan vertical médian de la bouilloire.

Selon un mode de réalisation de l'invention, les première et deuxième ouvertures de sortie sont situées dans une moitié avant du couvercle.

Selon un mode de réalisation de l'invention, le couvercle comporte un boîtier de couvercle inférieur et un boîtier de couvercle supérieur qui sont fixés l'un à l'autre et qui délimitent les premier et deuxième circuits d'écoulement de vapeur.

Selon un mode de réalisation de l'invention, les boîtiers de couvercle inférieur et supérieur délimitent en outre le canal de sortie de vapeur.

Selon un mode de réalisation de l'invention, le boîtier de couvercle inférieur comporte une pluralité de parois de barrage, également nommées parois de séparation, s'étendant depuis une face supérieure du boîtier de couvercle inférieur, les parois de barrage délimitant en partie les premier et deuxième canaux d'écoulement de vapeur et les première et deuxième chambres de détente.

Selon un mode de réalisation de l'invention, le boîtier de couvercle supérieur comporte une pluralité de rainures de réception prévues sur une face inférieure du boîtier de couvercle supérieur, les bords longitudinaux supérieurs des parois de barrage étant respectivement reçus, avantageusement de manière étanche, dans les rainures de réception prévues sur le boîtier de couvercle supérieur.

Selon un mode de réalisation de l'invention, l'au moins une ouverture d'évacuation de vapeur débouche dans une surface périphérique externe du couvercle.

Selon un mode de réalisation de l'invention, l'au moins une ouverture d'évacuation de vapeur est agencée dans une surface périphérique externe du couvercle entre une face supérieure du boîtier de couvercle inférieur et une face inférieure du boîtier de couvercle supérieur.

Selon un mode de réalisation de l'invention, la bouilloire comporte un dispositif de contrôle électromécanique comportant un élément bimétallique, l'au moins une ouverture d'évacuation de vapeur étant configurée pour diriger la vapeur contenue dans le couvercle vers l'élément bimétallique, le dispositif de contrôle électromécanique étant configuré de telle sorte qu'un afflux de vapeur sur l'élément bimétallique déclenche un arrêt de la chauffe de la bouilloire.

Selon un mode de réalisation de l'invention, l'au moins une ouverture d'évacuation de vapeur est configurée pour être située en regard d'une ouverture de passage prévue sur le contenant et débouchant dans la poignée de préhension.

Selon un mode de réalisation de l'invention, la bouilloire comporte en outre un dispositif de fixation configuré pour fixer de manière amovible, c'est-à-dire de manière temporaire et réversible, le couvercle au contenant.

Selon un mode de réalisation de l'invention, le dispositif de fixation comprend au moins un organe de fixation, tel qu'une patte de fixation ou un doigt de fixation, prévu sur le couvercle et au moins un élément de fixation prévu sur le contenant, l'au moins un organe de fixation étant monté mobile par rapport au couvercle entre une position de fixation dans laquelle l'au moins un organe de fixation est configuré pour coopérer avec l'au moins un élément de fixation de manière à fixer le couvercle au contenant, et une position de libération dans laquelle l'au moins un organe de fixation est configuré pour libérer l'au moins un élément de fixation de telle sorte que le couvercle peut être retiré du contenant.

Selon un mode de réalisation de l'invention, l'au moins un organe de fixation est monté coulissant par rapport au couvercle selon une direction de coulissement. La direction de coulissement peut s'étendre sensiblement perpendiculairement à un axe central du couvercle, et par exemple sensiblement radialement par rapport à l'axe central du couvercle.

Selon un mode de réalisation de l'invention, le dispositif de fixation comporte au moins un organe de rappel configuré pour rappeler l'au moins un organe de fixation dans la position de fixation.

Selon un mode de réalisation de l'invention, la bouilloire comporte un mécanisme d'actionnement prévu sur le couvercle et configuré pour déplacer l'au moins organe de fixation dans la position de libération lorsque le mécanisme d'actionnement est actionné par un utilisateur.

Selon un mode de réalisation de l'invention, le mécanisme d'actionnement comporte au moins un organe d'actionnement qui est actionnable manuellement par un utilisateur et qui est configuré pour déplacer l'au moins un organe de fixation de la position de fixation à la position de libération, l'au moins un organe d'actionnement étant monté mobile entre une première position d'actionnement et une deuxième position d'actionnement, l'au moins un organe d'actionnement et l'au moins un organe de fixation étant configurés de telle sorte qu'un déplacement de l'au moins un organe d'actionnement de la première position d'actionnement à la deuxième position d'actionnement entraîne un déplacement de l'au moins un organe de fixation de la position de fixation à la position de libération. Une telle configuration du mécanisme d'actionnement permet à un utilisateur de pouvoir déposer le couvercle par un simple actionnement du mécanisme d'actionnement.

Selon un mode de réalisation de l'invention, l'au moins un organe d'actionnement comporte une partie de manipulation configurée pour être manipulée par un utilisateur.

Selon un mode de réalisation de l'invention, la bouilloire comporte un dispositif d'indexage angulaire, également nommé dispositif de détrompage, configuré pour définir une unique position de fixation du couvercle sur le contenant.

Selon un mode de réalisation de l'invention, le couvercle est configuré pour reposer sur un épaulement annulaire prévu sur une surface circonférentielle interne du contenant.

Selon un mode de réalisation de l'invention, le couvercle comporte un conduit de versage configuré pour convoyer vers le bec verseur de l'eau contenue dans le volume interne, la bouilloire comprenant un obturateur monté mobile sur le couvercle entre une position de fermeture dans laquelle l'obturateur obture le conduit de versage et empêche un écoulement d'eau à travers le conduit de versage et une position d'ouverture dans laquelle l'obturateur libère le conduit de versage et autorise un écoulement d'eau à travers le conduit de versage. Une telle configuration du couvercle limite considérablement les risques d'écoulement d'eau à travers le bec verseur lorsque la bouilloire est renversée.

Selon un mode de réalisation de l'invention, le conduit de versage comporte une ouverture d'entrée d'eau débouchant dans la face inférieure du couvercle et une ouverture de sortie d'eau débouchant dans une surface périphérique externe du couvercle.

Selon un mode de réalisation de l'invention, la bouilloire comporte un système d'actionnement prévu sur le couvercle et configuré pour déplacer l'obturateur entre la position d'ouverture et la position de fermeture.

Selon un mode de réalisation de l'invention, le système d'actionnement comporte un bouton d'actionnement actionnable par un utilisateur et mobile entre une première position de bouton et une deuxième position de bouton, le système d'actionnement étant configuré de telle sorte qu'un déplacement, par un utilisateur, du bouton d'actionnement de la première position de bouton à la deuxième position de bouton entraîne un déplacement de l'obturateur de la position de fermeture à la position d'ouverture.

Selon un mode de réalisation de l'invention, le système d'actionnement est configuré de telle sorte qu'un déplacement, par un utilisateur, du bouton d'actionnement de la deuxième position de bouton à la première position de bouton entraîne un déplacement de l'obturateur de la position d'ouverture à la position de fermeture.

Selon un mode de réalisation de l'invention, le système d'actionnement comporte un dispositif de commande bistable, par exemple du type stylo à bille, configuré de telle sorte qu'un déplacement, par un utilisateur, du bouton d'actionnement de la première position de bouton à la deuxième position de bouton entraîne un déplacement de l'obturateur de la position de fermeture à la position d'ouverture, et de telle sorte qu'un déplacement, par un utilisateur, du bouton d'actionnement de la deuxième position de bouton à la première position de bouton entraîne un déplacement de l'obturateur de la position d'ouverture à la position de fermeture.

Selon un mode de réalisation de l'invention, le contenant comporte le bec verseur.

Selon un mode de réalisation de l'invention, le contenant comprend une ouverture de remplissage supérieure débouchant dans le volume interne.

Selon un mode de réalisation de l'invention, le bec verseur est situé au niveau de l'ouverture de remplissage supérieure.

Selon un mode de réalisation de l'invention, le couvercle est configuré pour être agencé au niveau de l'ouverture de remplissage supérieure.

Selon un mode de réalisation de l'invention, le contenant comporte un fond chauffant situé sous le volume interne et configuré pour chauffer l'eau contenue dans le volume interne. De façon avantageuse, le fond chauffant loge un élément électrique chauffant.

Selon un mode de réalisation de l'invention, la bouilloire comporte une base de support sur laquelle est destiné à reposer le contenant.

### Brève description des figures

L'invention sera mieux comprise à l'aide de la description qui suit en référence aux dessins schématiques annexés représentant, à titre d'exemple non limitatif, une forme d'exécution de cette bouilloire.
Figure 1 est une vue en perspective de dessus d'une bouilloire selon l'invention.
Figure 2 est une vue en perspective de dessus d'un contenant de la bouilloire de la figure 1.
Figure 3 est une vue en perspective de dessus d'un couvercle de la bouilloire de la figure 1.
Figure 4 est une vue en perspective de dessous du couvercle de la figure 3.
Figure 5 est une vue partielle en perspective de dessus du couvercle de la figure 3 dans laquelle un capot supérieur du couvercle a été retiré.
Figure 6 est une vue en perspective de dessous d'un boîtier de couvercle supérieur du couvercle de la figure 3.
Figure 7 est une vue en perspective de dessus d'un boîtier de couvercle inférieur du couvercle de la figure 3.
Figure 8 est une vue en perspective d'un système d'actionnement et d'un obturateur de la bouilloire de la figure 1.
Figure 9 est une vue de dessus du boîtier de couvercle inférieur de la figure 7.
Figure 10 est une vue en coupe longitudinale de la bouilloire de la figure 1.
Figure 11 est une vue partielle de côté de la bouilloire de la figure 1 montrant la bouilloire renversée sur une surface horizontale et occupant une position stable dans laquelle une poignée de préhension de la bouilloire et le côté latéral gauche du contenant prennent appui sur la surface horizontale.
Figure 12 est une vue partielle de côté de la bouilloire de la figure 1 montrant la bouilloire renversée sur une surface horizontale et occupant une position stable dans laquelle une poignée de préhension de la bouilloire et le côté latéral droit du contenant prennent appui sur la surface horizontale.

### Description détaillée

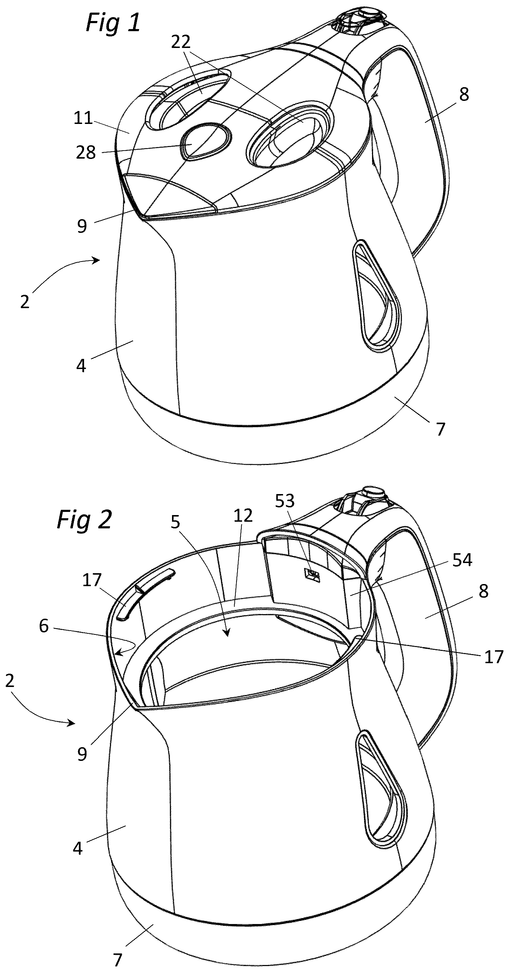

Les figures 1 à 12 représentent une bouilloire 2, et en particulier une bouilloire électrique, selon l'invention.

La bouilloire 2 comporte une base de support (non visible sur les figures) configuré pour être alimentée électriquement par un cordon d'alimentation (non représenté sur les figures), et un contenant 4 configuré pour reposer sur la base de support.

Le contenant 4 présente un axe longitudinal central A configuré pour s'étendre sensiblement verticalement lorsque le contenant 4 repose sur une surface horizontale. De façon avantageuse, le contenant 4 présente une forme générale de révolution autour de l'axe longitudinal central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant (non représenté sur les figures) configuré pour être alimenté électriquement lorsque le contenant 4 repose sur la base de support.

La bouilloire 2 comporte en outre une poignée de préhension 8 fixée au contenant 4, et un bec verseur 9 situé à l'opposé de la poignée de préhension 8 par rapport à l'axe longitudinal central A du contenant 4. Le bec verseur 9 peut par exemple être prévu sur le contenant 4 et être situé au niveau de l'ouverture de remplissage supérieure 6.

La bouilloire 2 comporte en outre un couvercle 11 configuré pour fermer le contenant 4, et plus particulièrement pour être agencé au niveau de l'ouverture de remplissage supérieure 6. Selon le mode de réalisation représenté sur les figures, le couvercle 11 est configuré pour reposer sur un épaulement annulaire 12 prévu sur une surface circonférentielle interne du contenant 4.

Le couvercle 11 est pourvu d'une face inférieure 13 configurée pour être située en regard du volume interne 5 du contenant 4. De façon avantageuse, la bouilloire 2 comporte un joint d'étanchéité annulaire 14 fixé à la face inférieure 13 du couvercle 11 et configuré pour coopérer de manière étanche avec le contenant 4, et notamment avec l'épaulement annulaire 12.

La bouilloire 2 comporte de plus un dispositif de fixation configuré pour fixer de manière amovible, c'est-à-dire de manière temporaire et réversible, le couvercle 11 au contenant 4.

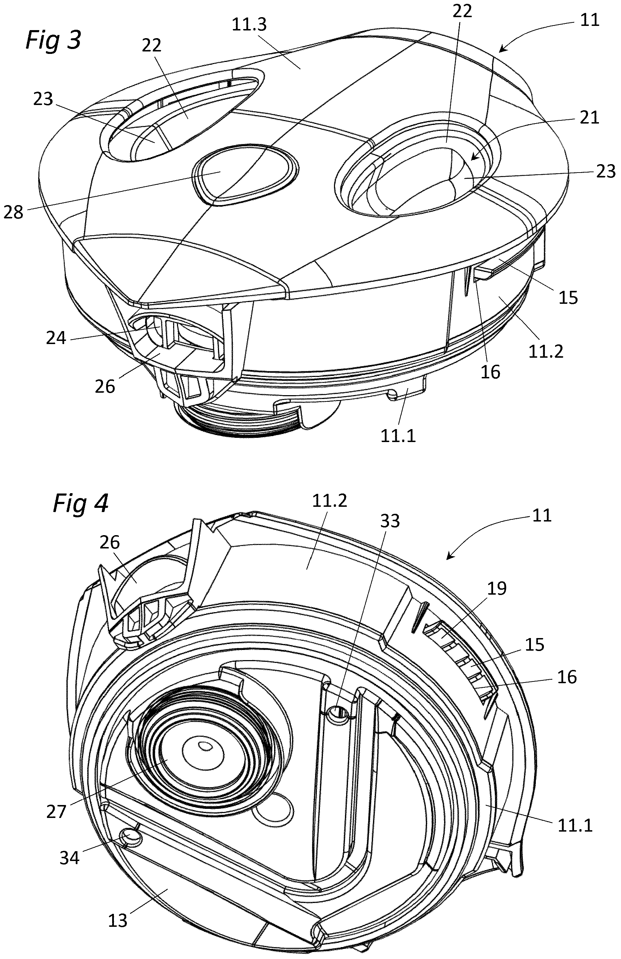

Le dispositif de fixation comprend deux organes de fixation 15 (voir notamment les figures 3 et 4), tels que des doigts de fixation, prévus sur le couvercle 11 et diamétralement opposés. Chaque organe de fixation 15 est logé dans le couvercle 11 et est configuré pour faire saillie hors du couvercle 11 à travers une ouverture traversante 16 respective prévue sur le couvercle 11. De façon avantageuse, chaque ouverture traversante 16 débouche dans la surface périphérique externe du couvercle 11 et au-dessus du joint d'étanchéité annulaire 14.

Le dispositif de fixation comprend en outre deux éléments de fixation 17 (voir la figure 2), tels que des languettes de retenue, prévus sur une surface interne du contenant 4 et situés à proximité de l'ouverture de remplissage supérieure 6. Selon le mode de réalisation représenté sur les figures, les organes de fixation 15 sont plus particulièrement configurés pour venir en butée contre une face inférieure de l'élément de fixation 17 respectif lorsque le couvercle 11 est fixé au contenant 4. Cependant, selon une variante de réalisation de l'invention, le dispositif de fixation pourrait comporter un unique élément de fixation 17 qui pourrait par exemple être annulaire.

Selon le mode de réalisation représenté sur les figures, les organes de fixation 15 sont montés coulissants par rapport au couvercle 11 selon une direction de coulissement et entre une position de fixation dans laquelle chaque organe de fixation 15 est configuré pour coopérer avec l'élément de fixation 17 respectif de manière à fixer le couvercle 11 au contenant 4, et une position de libération dans laquelle chaque organe de fixation 15 est configuré pour libérer l'élément de fixation 17 respectif de telle sorte que le couvercle 11 peut être retiré du contenant 4. De façon avantageuse, la direction de coulissement s'étend sensiblement radialement par rapport à un axe central du couvercle 11.

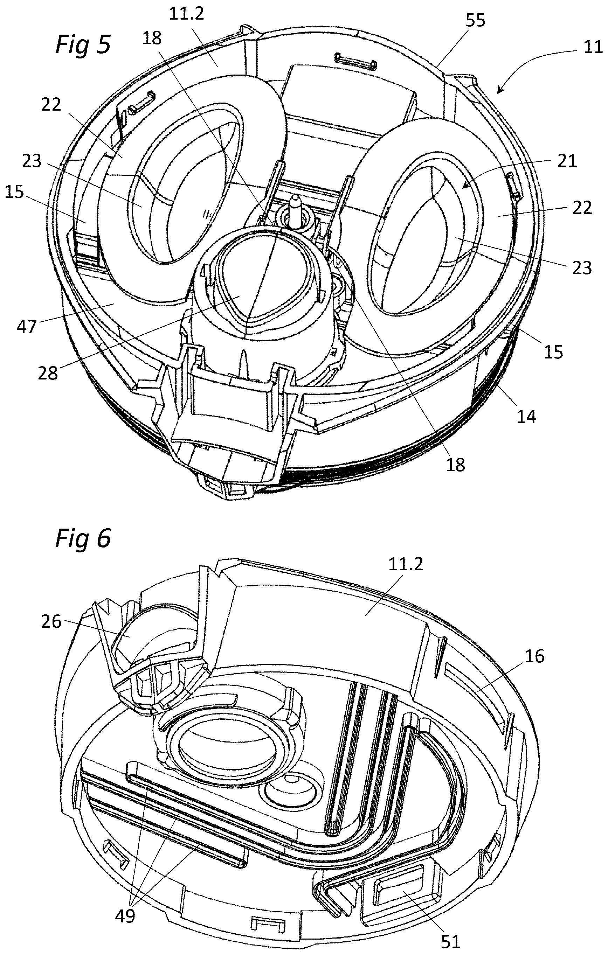

Selon le mode de réalisation représenté sur les figures, le dispositif de fixation comporte deux organes de rappel 18 (voir la figure 5) logé dans le couvercle 11 et configuré pour rappeler les organes de fixation 15 dans la position de fixation. De façon avantageuse, chaque organe de fixation 15 comporte une surface inclinée 19, telle qu'un chanfrein d'extrémité, configurée pour coopérer avec l'élément de fixation 17 respectif lorsque le couvercle 11 est introduit dans l'ouverture de remplissage supérieure 6, de manière à automatiquement déplacer les organes de fixation 15 dans la position de libération. Une telle configuration du dispositif de fixation permet une fixation aisée du couvercle 11 sur le contenant 4.

Comme montré plus particulièrement sur les figures 3 et 4, la bouilloire 2 comporte un mécanisme d'actionnement 21 prévu sur le couvercle 11 et configuré pour déplacer les organes de fixation 15 dans la position de libération lorsque le mécanisme d'actionnement 21 est actionné par un utilisateur.

Le mécanisme d'actionnement 21 comporte plus particulièrement deux organes d'actionnement 22 qui sont actionnables manuellement par un utilisateur et qui sont configurés pour déplacer les organes de fixation 15 de la position de fixation à la position de libération. Selon le mode de réalisation représenté sur les figures, les organes d'actionnement 22 comportent respectivement deux parties de manipulation 23 qui sont accessibles depuis une face supérieure du couvercle 11 et qui sont configurées pour être manipulées par un utilisateur.

Les organes d'actionnement 22 sont montés coulissants par rapport au couvercle 11 entre une première position d'actionnement et une deuxième position d'actionnement. Les organes d'actionnement 22 et les organes de fixation 15 sont configurés de telle sorte qu'un déplacement des organes d'actionnement 22 de la première position d'actionnement à la deuxième position d'actionnement entraîne un déplacement des organes de fixation 15 de la position de fixation à la position de libération. De façon avantageuse, chaque organe d'actionnement 22 et l'organe de fixation 15 respectif sont réalisés en une seule pièce, et les deux organes d'actionnement 22 sont configurés pour déplacer les organes de fixation 15 dans la position de libération par pincement des deux parties de manipulation 23, c'est-à-dire par un rapprochement des deux parties de manipulation 23 l'une de l'autre.

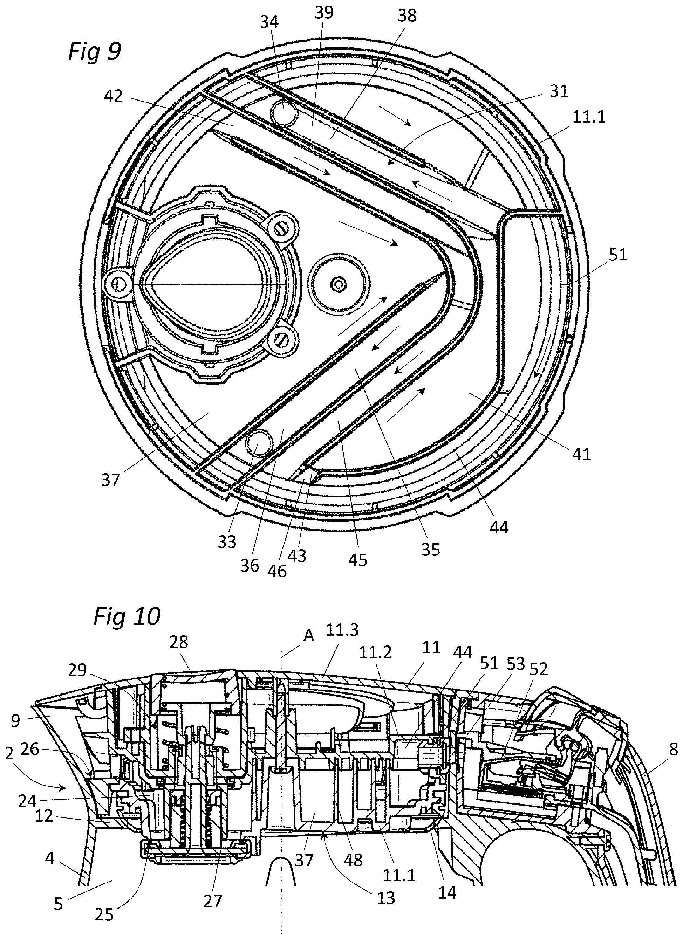

Comme montré plus particulièrement sur la figure 10, le couvercle 11 comporte un conduit de versage 24 configuré pour convoyer vers le bec verseur 9 de l'eau contenue dans le volume interne 5. Le conduit de versage 24 comporte plus particulièrement une ouverture d'entrée d'eau 25 débouchant dans la face inférieure 13 du couvercle 11, et une ouverture de sortie d'eau 26 débouchant dans une surface périphérique externe du couvercle 11 et destinée à être située sensiblement en regard du bec verseur 9 lorsque le couvercle 11 est fixé au contenant 4.

La bouilloire 2 comprend en outre un obturateur 27 (voir les figures 4 et 10) monté mobile sur le couvercle 11 entre une position de fermeture dans laquelle l'obturateur 27 obture le conduit de versage 24 et empêche un écoulement d'eau à travers le conduit de versage 24, et une position d'ouverture dans laquelle l'obturateur 27 libère le conduit de versage 24 et autorise un écoulement d'eau à travers le conduit de versage 24.

La bouilloire 2 comporte de plus un système d'actionnement prévu sur le couvercle 11 et configuré pour déplacer l'obturateur 27 entre la position d'ouverture et la position de fermeture. Selon le mode de réalisation représenté sur les figures, le système d'actionnement comporte un bouton d'actionnement 28 actionnable par un utilisateur et mobile entre une première position de bouton et une deuxième position de bouton, le système d'actionnement étant configuré de telle sorte qu'un déplacement, par un utilisateur, du bouton d'actionnement 28 de la première position de bouton à la deuxième position de bouton entraîne un déplacement de l'obturateur 27 de la position de fermeture à la position d'ouverture.

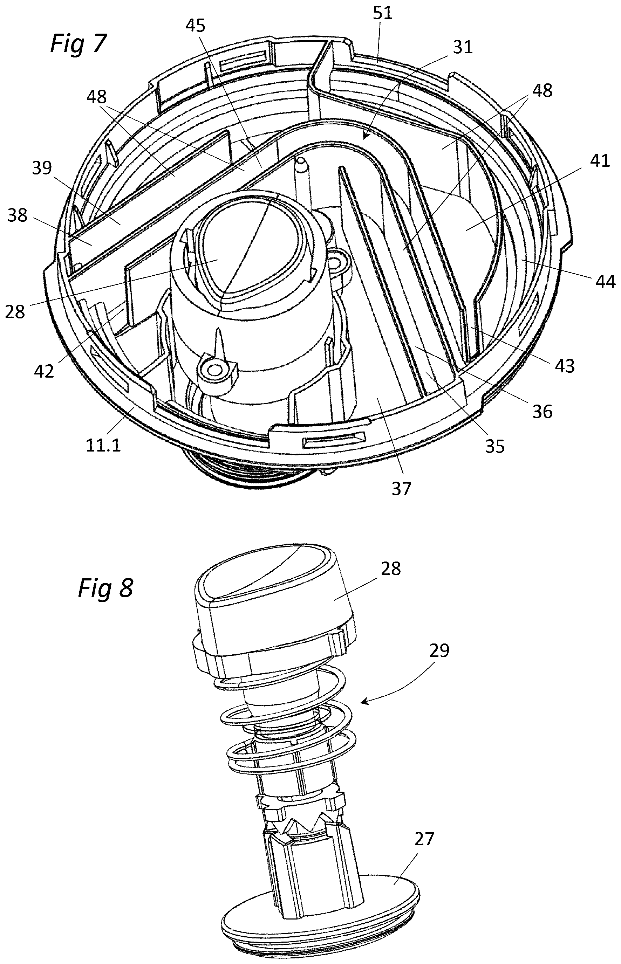

Selon le mode de réalisation représenté sur les figures, le système d'actionnement comporte un dispositif de commande bistable 29 (voir notamment les figures 8 et 10), par exemple du type stylo à bille, configuré de telle sorte qu'un déplacement, par un utilisateur, du bouton d'actionnement 28 de la première position de bouton à la deuxième position de bouton entraîne un déplacement de l'obturateur 27 de la position de fermeture à la position d'ouverture, et de telle sorte qu'un déplacement, par un utilisateur, du bouton d'actionnement 28 de la deuxième position de bouton à la première position de bouton entraîne un déplacement de l'obturateur 27 de la position d'ouverture à la position de fermeture. Les première et deuxième positions de bouton correspondent donc à des positions stables du bouton d'actionnement 28.

La bouilloire 2 comporte également un dispositif d'évacuation de vapeur 31 configuré pour convoyer, à l'extérieur du volume interne 5 et par exemple vers l'extérieur de la bouilloire 2 ou vers la poignée de préhension 8, de la vapeur générée dans le volume interne 5 lors d'une ébullition de l'eau contenue dans le volume interne 5.

Le dispositif d'évacuation de vapeur 31 comprend notamment un premier orifice d'admission de vapeur 33 et un deuxième orifice d'admission de vapeur 34 qui sont prévus sur le couvercle 11 et qui débouchent dans la face inférieure 13 du couvercle 11 et à proximité d'un bord périphérique de la face inférieure 13 du couvercle 11. Lorsque le couvercle 11 est fixé au contenant 4 et que ce dernier repose sur une surface horizontale, les premier et deuxième orifices d'admission de vapeur 33, 34 débouchent dans le volume interne 5 délimité par le contenant 4 et au-dessus d'un niveau de remplissage maximal du contenant 4.

Selon le mode de réalisation représenté sur les figures, les premier et deuxième orifices d'admission de vapeur 33, 34 sont situés dans une moitié avant de la face inférieure 13 du couvercle 11, et sont disposés de part et d'autre d'un plan vertical médian P de la bouilloire 2 qui passe par le bec verseur 9 et la poignée de préhension 8.

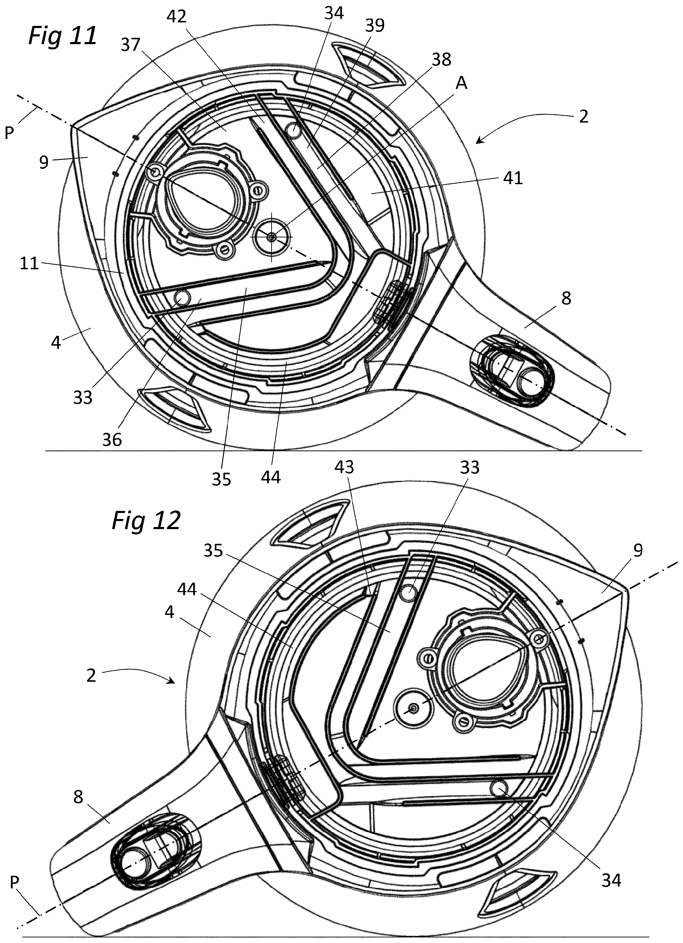

Comme montré plus particulièrement sur les figures 11 et 12, la bouilloire 2 est configurée :
- de telle sorte que, lorsque la bouilloire 2 est renversée et que la poignée de préhension 8 et un premier côté latéral, à savoir le côté droit, du contenant 4 reposent de manière stable sur une surface horizontale, le premier orifice d'admission de vapeur 33 est situé au-dessus du niveau d'eau dans le volume interne 5 et le deuxième orifice d'admission de vapeur 34 est situé en dessous du niveau d'eau dans le volume interne 5, et
- de telle sorte que, lorsque la bouilloire 2 est renversée et que la poignée de préhension 8 et un deuxième côté latéral, à savoir le côté gauche, du contenant 4 reposent de manière stable sur une surface horizontale, le premier orifice d'admission de vapeur 33 est situé en dessous du niveau d'eau dans le volume interne 5 et le deuxième orifice d'admission de vapeur 34 est situé au-dessus du niveau d'eau dans le volume interne 5.

Comme montré plus particulièrement sur les figures 7 et 9, le dispositif d'évacuation de vapeur 31 comprend également :
- un premier circuit d'écoulement de vapeur 35 délimité par le couvercle 11, le premier circuit d'écoulement de vapeur 35 comprenant un premier canal d'écoulement de vapeur 36 relié fluidiquement au premier orifice d'admission de vapeur 33 et une première chambre de détente 37 reliée fluidiquement au premier canal d'écoulement de vapeur 36 et située en aval du premier canal d'écoulement de vapeur 36, et
- un deuxième circuit d'écoulement de vapeur 38 délimité par le couvercle 11, le deuxième circuit d'écoulement de vapeur 38 comprenant un deuxième canal d'écoulement de vapeur 39 relié fluidiquement au deuxième orifice d'admission de vapeur 34 et une deuxième chambre de détente 41 reliée fluidiquement au deuxième canal d'écoulement de vapeur 39 et située en aval du deuxième canal d'écoulement de vapeur 39.

Comme montré plus particulièrement sur la figure 9, le premier canal d'écoulement de vapeur 36 comporte une première portion d'extrémité dans laquelle débouche le premier orifice d'admission de vapeur 33 et une deuxième portion d'extrémité débouchant dans la première chambre de détente 37, et le deuxième canal d'écoulement de vapeur 39 comporte une première portion d'extrémité dans laquelle débouche le deuxième orifice d'admission de vapeur 34 et une deuxième portion d'extrémité débouchant dans la deuxième chambre de détente 41. De façon avantageuse, le premier orifice d'admission de vapeur 33 débouche dans une paroi de fond du premier canal d'écoulement de vapeur 36, et le deuxième orifice d'admission de vapeur 34 débouche dans une paroi de fond du deuxième canal d'écoulement de vapeur 39.

Selon le mode de réalisation représenté sur les figures, les premier et deuxième canaux d'écoulement de vapeur 36, 39 sont rectilignes et convergent l'un vers l'autre en direction d'une partie arrière du couvercle 11, et par exemple sensiblement à l'opposé du bec verseur 9 par rapport à l'axe longitudinal central A du contenant 4. De façon avantageuse, le premier canal d'écoulement de vapeur 36 présente une section de passage qui est sensiblement constante le long de la longueur du premier canal d'écoulement de vapeur 36, et le deuxième canal d'écoulement de vapeur 39 présente une section de passage qui est sensiblement constante le long de la longueur du canal tube d'écoulement de vapeur.

Selon le mode de réalisation représenté sur les figures, la première chambre de détente 37 présente un volume interne supérieur à au moins trois fois le volume interne du premier canal d'écoulement de vapeur 36, et la deuxième chambre de détente 41 présente un volume interne supérieur à au moins trois fois le volume interne du deuxième canal d'écoulement de vapeur 39. De façon avantageuse, la première chambre de détente 37 comporte au moins une portion de chambre présentant une section de passage supérieure à au moins deux fois la section de passage maximale du premier canal d'écoulement de vapeur 36, et la deuxième chambre de détente 41 comporte au moins une portion de chambre présentant une section de passage supérieure à au moins deux fois la section de passage maximale du deuxième canal d'écoulement de vapeur 39.

Comme montré plus particulièrement sur les figures 9 et 11, la première chambre de détente 37 comporte une première ouverture de sortie 42 configurée pour être située en un point haut du premier circuit d'écoulement de vapeur 35 lorsque la bouilloire 2 est renversée et que la poignée de préhension 8 et le deuxième côté latéral du contenant 4 reposent de manière stable sur une surface horizontale, et la deuxième chambre de détente 41 comporte une deuxième ouverture de sortie 43 configurée pour être située en un point haut du deuxième circuit d'écoulement de vapeur 38 lorsque la bouilloire 2 est renversée et que la poignée de préhension 8 et le premier côté latéral du contenant 4 reposent de manière stable sur une surface horizontale. De façon avantageuse, la première ouverture de sortie 42 est située à proximité du deuxième orifice d'admission de vapeur 34, et la deuxième ouverture de sortie 43 est située à proximité du premier orifice d'admission de vapeur 33.

Selon le mode de réalisation représenté sur les figures, les première et deuxième ouvertures de sortie 42, 43 sont situées dans une moitié avant du couvercle 11 et sont configurées pour être disposées de part et d'autre du plan vertical médian P de la bouilloire 2.

Le dispositif d'évacuation de vapeur 31 comprend en outre un canal de sortie de vapeur 44 délimité par le couvercle 11 et s'étendant le long d'un bord périphérique du couvercle 11. Le canal de sortie de vapeur 44 est relié fluidiquement aux première et deuxième chambres de détente 37, 41, et est situé en aval des première et deuxième chambres de détente 37, 41. Selon le mode de réalisation représenté sur les figures, le premier circuit d'écoulement de vapeur 35 comporte un canal de liaison 45 configuré pour relier fluidiquement la première chambre de détente 37 au canal de sortie de vapeur 44.

Comme montré plus particulièrement sur la figure 9, les premier et deuxième circuits d'écoulement de vapeur 35, 38 se rejoignent au niveau d'une zone de jonction 46 située à proximité d'un bord périphérique de la face inférieure 13 du couvercle 11, et le canal de sortie de vapeur 44 est relié fluidiquement aux premier et deuxième circuits d'écoulement de vapeur 35, 38 au niveau de la zone de jonction 46.

Selon le mode de réalisation représenté sur les figures, le couvercle 11 comporte un boîtier de couvercle inférieur 11.1 et un boîtier de couvercle supérieur 11.2 qui sont fixés l'un à l'autre et qui délimitent les premier et deuxième circuits d'écoulement de vapeur 35, 38 et le canal de sortie de vapeur 44. Le couvercle 11 comporte en outre un capot supérieur 11.3 qui est fixé au boîtier de couvercle supérieur 11.2, le capot supérieur 11.3 et le boîtier de couvercle supérieur 11.2 délimitant un logement interne 47 (voir la figure 5) dans lequel sont logés au moins en partie les organes de fixation 15, les organes de rappel 18 et les organes d'actionnement 22.

Selon le mode de réalisation représenté sur les figures, le boîtier de couvercle inférieur 11.1 comporte une pluralité de parois de barrage 48 (voir la figure 7), également nommées parois de séparation, qui s'étendent depuis une face supérieure du boîtier de couvercle inférieur 11.1 et qui délimitent en partie les premier et deuxième canaux d'écoulement de vapeur 36, 39, les première et deuxième chambres de détente 37, 41, le canal de liaison 45 et le canal de sortie de vapeur 44. Le boîtier de couvercle supérieur 11.2 comporte une pluralité de rainures de réception 49 (voir la figure 6) qui sont prévues sur une face inférieure du boîtier de couvercle supérieur 11.2 et dans lesquelles sont reçus, avantageusement de manière étanche, des bords longitudinaux supérieurs des parois de barrage 48.

Selon le mode de réalisation représenté sur les figures, le premier canal d'écoulement de vapeur 36 et la première chambre de détente 37 comportent des parois de fond qui sont configurées pour être inclinées par rapport à l'horizontale lorsque le contenant 4 repose sur une surface horizontale et qui sont configurées pour guider de l'eau contenue dans le premier canal d'écoulement de vapeur 36 et la première chambre de détente 37 vers le premier orifice d'admission de vapeur 33, et le deuxième canal d'écoulement de vapeur 39 et la deuxième chambre de détente 41 comportent également des parois de fond qui sont configurées pour être inclinées par rapport à l'horizontale lorsque le contenant 4 repose sur une surface horizontale et qui sont configurées pour guider de l'eau contenue dans le deuxième canal d'écoulement de vapeur 39 et la deuxième chambre de détente 41 vers le deuxième orifice d'admission de vapeur 34. Le canal de liaison 45 et le canal de sortie de vapeur 44 comportent également des parois de fond qui sont configurées pour être inclinées par rapport à l'horizontale lorsque le contenant 4 repose sur une surface horizontale et qui sont configurées pour guider de l'eau contenue dans le canal de liaison 45 et le canal de sortie de vapeur 44 vers la deuxième chambre de détente 41. Le sens d'écoulement de l'eau contenue dans le couvercle 11 en direction des premier et deuxième orifices d'admission de vapeur 33, 34 est représenté par des flèches sur la figure 9.

Le dispositif d'évacuation de vapeur 31 comprend de plus une ouverture d'évacuation de vapeur 51 prévue sur le couvercle 11 et débouchant d'une part dans le canal de sortie de vapeur 44 et d'autre part débouche dans une surface périphérique externe du couvercle 11. L'ouverture d'évacuation de vapeur 51 est configurée pour permettre une évacuation de la vapeur contenue dans le couvercle 11 à l'extérieur du couvercle 11.

Selon le mode de réalisation représenté sur les figures, la bouilloire 2 comporte un dispositif de contrôle électromécanique comportant un élément bimétallique 52 (voir la figure 10) disposé dans la poignée de préhension 8, et l'ouverture d'évacuation de vapeur 51 est configurée pour diriger la vapeur contenue dans le canal de sortie de vapeur 44 vers l'élément bimétallique 52. Le dispositif de contrôle électromécanique est plus particulièrement configuré de telle sorte qu'un afflux de vapeur sur l'élément bimétallique 52 déclenche un arrêt de la chauffe de la bouilloire 2.

De façon avantageuse, l'ouverture d'évacuation de vapeur 51 est prévue dans une partie arrière du couvercle 11, et est configurée pour être située en regard d'une ouverture de passage 53 (voir les figures 2 et 10) prévue sur le contenant 4 et débouchant dans la poignée de préhension 8.

Comme montré plus particulièrement sur les figures 2 et 5, la bouilloire 2 comporte un dispositif d'indexage angulaire, également nommé dispositif de détrompage, configuré pour définir une unique position de fixation du couvercle 11 sur le contenant 4. Le dispositif d'indexage angulaire peut par exemple comporter au moins un élément d'indexage 54, tel qu'un bossage d'indexage, prévu sur le contenant 4 et au moins un logement d'indexage 55 prévu sur le couvercle 11 et configuré pour coopérer avec l'au moins un élément d'indexage 54.

Selon un mode de réalisation de l'invention non représenté sur les figures, l'élément bimétallique 52 pourrait être disposé dans une partie inférieure du contenant 4. Selon un tel mode de réalisation, l'ouverture d'évacuation de vapeur 51 est configurée pour être reliée fluidiquement à un tube vapeur qui est agencé dans le contenant 4 et qui est relié fluidiquement à l'élément bimétallique 52.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention tel que défini par les revendications.

## Revendications

1. Bouilloire (2) comprenant :
- un contenant (4) présentant un axe longitudinal central (A) configuré pour s'étendre sensiblement verticalement lorsque le contenant (4) repose sur une surface horizontale, le contenant (4) délimitant un volume interne (5) destiné à contenir de l'eau et dans lequel l'eau est destinée à être chauffée,
- une poignée de préhension (8),
- un bec verseur (9) configuré pour être situé à l'opposé de la poignée de préhension (8) par rapport à l'axe longitudinal central (A) du contenant (4),
- un couvercle (11) configuré pour fermer le contenant (4), le couvercle (11) comprenant une face inférieure (13) configurée pour être située en regard du volume interne (5), et
- un dispositif d'évacuation de vapeur (31) configuré pour convoyer, à l'extérieur du volume interne (5), de la vapeur générée dans le volume interne (5) lors d'une ébullition de l'eau contenue dans le volume interne (5), le dispositif d'évacuation de vapeur (31) comprenant un premier orifice d'admission de vapeur (33) et un deuxième orifice d'admission de vapeur (34) qui sont prévus sur le couvercle (11) et qui débouchent dans la face inférieure (13) du couvercle (11), les premier et deuxième orifices d'admission de vapeur (33, 34) étant configurés pour être reliés fluidiquement au volume interne (5) délimité par le contenant (4), et pour être disposés de part et d'autre d'un plan vertical médian (P) de la bouilloire (2) qui passe par le bec verseur (9) et la poignée de préhension (8),
le dispositif d'évacuation de vapeur (31) comprenant en outre :
∘ un premier circuit d'écoulement de vapeur (35) délimité par le couvercle (11), le premier circuit d'écoulement de vapeur (35) comprenant un premier canal d'écoulement de vapeur (36) relié fluidiquement au premier orifice d'admission de vapeur (33), et
∘ un deuxième circuit d'écoulement de vapeur (38) délimité par le couvercle (11), le deuxième circuit d'écoulement de vapeur (38) comprenant un deuxième canal d'écoulement de vapeur (39) relié fluidiquement au deuxième orifice d'admission de vapeur (34),
**caractérisé en ce que** le premier circuit d'écoulement de vapeur comprend une première chambre de détente (37) reliée fluidiquement au premier canal d'écoulement de vapeur (36) et située en aval du premier canal d'écoulement de vapeur (36), **en ce que** le deuxième circuit d'écoulement de vapeur comprend une deuxième chambre de détente (41) reliée fluidiquement au deuxième canal d'écoulement de vapeur (39) et située en aval du deuxième canal d'écoulement de vapeur (39), et **en ce que** le dispositif d'évacuation de vapeur (31) comprend au moins une ouverture d'évacuation de vapeur (51) prévue sur le couvercle (11) et reliée fluidiquement aux première et deuxième chambres de détente (37, 41), l'au moins une ouverture d'évacuation de vapeur (51) étant configurée pour permettre une évacuation de la vapeur contenue dans le couvercle (11) à l'extérieur du couvercle (11).

2. Bouilloire (2) selon la revendication 1, dans laquelle le dispositif d'évacuation de vapeur (31) comprend en outre un canal de sortie de vapeur (44) délimité par le couvercle (11), le canal de sortie de vapeur (44) étant relié fluidiquement aux première et deuxième chambres de détente (37, 41) et étant situé en aval des première et deuxième chambres de détente (37, 41), l'au moins une ouverture d'évacuation de vapeur (51) étant reliée fluidiquement au canal de sortie de vapeur (44).

3. Bouilloire (2) selon la revendication 2, dans laquelle les premier et deuxième circuits d'écoulement de vapeur (35, 38) se rejoignent au niveau d'une zone de jonction (46), le canal de sortie de vapeur (44) étant relié fluidiquement aux premier et deuxième circuits d'écoulement de vapeur (35, 38) au niveau de la zone de jonction (46).

4. Bouilloire (2) selon la revendication 2 ou 3, dans laquelle le premier circuit d'écoulement de vapeur (35) comporte un canal de liaison (45) configuré pour relier fluidiquement la première chambre de détente (37) au canal de sortie de vapeur (44).

5. Bouilloire (2) selon l'une quelconque des revendications 1 à 4, dans laquelle les premier et deuxième canaux d'écoulement de vapeur (36, 39) s'étendent en direction d'une partie arrière du couvercle (11).

6. Bouilloire (2) selon l'une quelconque des revendications 1 à 5, dans laquelle chacun des premier et deuxième canaux d'écoulement de vapeur (36, 39) est sensiblement rectiligne.

7. Bouilloire (2) selon l'une quelconque des revendications 1 à 6, dans laquelle le premier canal d'écoulement de vapeur (36) et la première chambre de détente (37) comportent des parois de fond qui sont configurées pour être inclinées par rapport à l'horizontale lorsque le contenant (4) repose sur une surface horizontale et qui sont configurées pour guider de l'eau contenue dans le premier canal d'écoulement de vapeur (36) et la première chambre de détente (37) vers le premier orifice d'admission de vapeur (33), et le deuxième canal d'écoulement de vapeur (39) et la deuxième chambre de détente (41) comportent des parois de fond qui sont configurées pour être inclinées par rapport à l'horizontale lorsque le contenant (4) repose sur une surface horizontale et qui sont configurées pour guider de l'eau contenue dans le deuxième canal d'écoulement de vapeur (39) et la deuxième chambre de détente (41) vers le deuxième orifice d'admission de vapeur (34).

8. Bouilloire (2) selon l'une quelconque des revendications 1 à 7, dans laquelle la bouilloire (2) est configurée de telle sorte que, lorsque la bouilloire (2) est renversée et que la poignée de préhension (8) et un premier côté latéral du contenant (4) reposent de manière stable sur une surface horizontale, le premier orifice d'admission de vapeur (33) est situé au-dessus du niveau d'eau dans le volume interne (5) et le deuxième orifice d'admission de vapeur (34) est situé en dessous du niveau d'eau dans le volume interne (5), et de telle sorte que, lorsque la bouilloire (2) est renversée et que la poignée de préhension (8) et un deuxième côté latéral du contenant (4) reposent de manière stable sur une surface horizontale, le premier orifice d'admission de vapeur (33) est situé en dessous du niveau d'eau dans le volume interne (5) et le deuxième orifice d'admission de vapeur (34) est situé au-dessus du niveau d'eau dans le volume interne (5).

9. Bouilloire (2) selon l'une quelconque des revendications 1 à 8, dans laquelle la première chambre de détente (37) comporte une première ouverture de sortie (42) configurée pour être située en un point haut du premier circuit d'écoulement de vapeur (35) lorsque la bouilloire (2) est renversée et que la poignée de préhension (8) et le deuxième côté latéral du contenant (4) reposent de manière stable sur une surface horizontale, et la deuxième chambre de détente (41) comporte une deuxième ouverture de sortie (43) configurée pour être située en un point haut du deuxième circuit d'écoulement de vapeur (38) lorsque la bouilloire (2) est renversée et que la poignée de préhension (8) et le premier côté latéral du contenant (4) reposent de manière stable sur une surface horizontale.

10. Bouilloire (2) selon la revendication 9, dans laquelle la première ouverture de sortie (42) est située à proximité du deuxième orifice d'admission de vapeur (34), et la deuxième ouverture de sortie (43) est située à proximité du premier orifice d'admission de vapeur (33).

11. Bouilloire (2) selon l'une quelconque des revendications 1 à 10, dans laquelle le couvercle (11) comporte un boîtier de couvercle inférieur (11.1) et un boîtier de couvercle supérieur (11.2) qui sont fixés l'un à l'autre et qui délimitent les premier et deuxième circuits d'écoulement de vapeur (35, 38).

12. Bouilloire (2) selon l'une quelconque des revendications 1 à 11, dans laquelle le boîtier de couvercle inférieur (11.1) comporte une pluralité de parois de barrage (48) s'étendant depuis une face supérieure du boîtier de couvercle inférieur (11.1), les parois de barrage (48) délimitant en partie les premier et deuxième canaux d'écoulement de vapeur (36, 39) et les première et deuxième chambres de détente (37, 41).

13. Bouilloire (2) selon l'une quelconque des revendications 1 à 12, laquelle comporte un dispositif de contrôle électromécanique comportant un élément bimétallique (52), l'au moins une ouverture d'évacuation de vapeur (51) étant configurée pour diriger la vapeur contenue dans le couvercle (11) vers l'élément bimétallique (52), le dispositif de contrôle électromécanique étant configuré de telle sorte qu'un afflux de vapeur sur l'élément bimétallique (52) déclenche un arrêt de la chauffe de la bouilloire (2).

14. Bouilloire (2) selon l'une quelconque des revendications 1 à 13, laquelle comporte en outre un dispositif de fixation configuré pour fixer de manière amovible le couvercle (11) au contenant (4).

15. Bouilloire (2) selon l'une quelconque des revendications 1 à 14, dans laquelle le couvercle (11) comporte un conduit de versage (24) configuré pour convoyer vers le bec verseur (9) de l'eau contenue dans le volume interne (5), la bouilloire (2) comprenant un obturateur (27) monté mobile sur le couvercle (11) entre une position de fermeture dans laquelle l'obturateur (27) obture le conduit de versage (24) et empêche un écoulement d'eau à travers le conduit de versage (24) et une position d'ouverture dans laquelle l'obturateur (27) libère le conduit de versage (24) et autorise un écoulement d'eau à travers le conduit de versage (24).

## Patentansprüche

1. Wasserkocher (2), umfassend:
- einen Behälter (4) mit einer zentralen Längsachse (A), die so ausgelegt ist, dass sie sich im Wesentlichen vertikal erstreckt, wenn der Behälter (4) auf einer horizontalen Oberfläche steht, wobei der Behälter (4) ein Innenvolumen (5) begrenzt, das Wasser aufnehmen soll und in dem das Wasser erwärmt werden soll,
- einen Handgriff (8),
- einen Ausgießer (9), der so ausgelegt ist, dass er in Bezug auf die Mittellängsachse (A) des Behälters (4) dem Handgriff (8) gegenüberliegt,
- einen Deckel (11), der so ausgelegt ist, dass er den Behälter (4) verschließt, wobei der Deckel (11) eine Unterseite (13) umfasst, die so ausgelegt ist, dass sie sich gegenüber dem Innenvolumen (5) befindet, und
- eine Dampfableitungsvorrichtung (31), die so ausgelegt ist, dass sie den Dampf, der beim Sieden des im Innenvolumen (5) enthaltenen Wassers im Innenvolumen (5) erzeugt wird, aus dem Innenvolumen (5) heraus fördert, wobei die Dampfableitungsvorrichtung (31) eine erste Dampfeinlassöffnung (33) und eine zweite Dampfeinlassöffnung (34) umfasst, die am Deckel (11) vorgesehen sind und in der Unterseite (13) des Deckels (11) münden, wobei die erste und die zweite Dampfeinlassöffnung (33, 34) so ausgelegt sind, dass sie fluidisch mit dem Innenvolumen (5) verbunden sind, das vom Behälter (4) begrenzt ist, und auf beiden Seiten einer mittleren vertikalen Ebene (P) des Wasserkochers (2) angeordnet sind, die durch den Ausgießer (9) und den Handgriff (8) verläuft,
wobei die Dampfableitungsvorrichtung (31) ferner Folgendes umfasst:
o einen ersten Dampfströmungskreislauf (35), der durch den Deckel (11) begrenzt ist, wobei der erste Dampfströmungskreislauf (35) einen ersten Dampfströmungskanal (36) umfasst, der fluidisch mit der ersten Dampfeinlassöffnung (33) verbunden ist, und
o einen zweiten Dampfströmungskreislauf (38), der durch den Deckel (11) begrenzt ist, wobei der zweite Dampfströmungskreislauf (38) einen zweiten Dampfströmungskanal (39) umfasst, der fluidisch mit der zweiten Dampfeinlassöffnung (34) verbunden ist, **dadurch gekennzeichnet, dass** der erste Dampfströmungskreislauf eine erste Expansionskammer (37) umfasst, die fluidisch mit dem ersten Dampfströmungskanal (36) verbunden ist und sich stromabwärts des ersten Dampfströmungskanals (36) befindet, dass der zweite Dampfströmungskreislauf eine zweite Expansionskammer (41) umfasst, die mit dem zweiten Dampfströmungskanal (39) fluidisch verbunden ist und sich stromabwärts des zweiten Dampfströmungskanals (39) befindet, und dass die Dampfableitungsvorrichtung (31) mindestens eine Dampfableitungsöffnung (51) umfasst, die am Deckel (11) vorgesehen und mit der ersten und der zweiten Expansionskammer (37, 41) fluidisch verbunden ist, wobei die mindestens eine Dampfableitungsöffnung (51) so ausgelegt ist, dass sie ein Ableiten des im Deckel (11) enthaltenen Dampfs aus dem Deckel (11) heraus ermöglicht.

2. Wasserkocher (2) nach Anspruch 1, wobei die Dampfableitungsvorrichtung (31) ferner einen durch den Deckel (11) begrenzten Dampfauslasskanal (44) umfasst, wobei der Dampfauslasskanal (44) fluidisch mit der ersten und der zweiten Expansionskammer (37, 41) verbunden ist und sich stromabwärts der ersten und der zweiten Expansionskammer (37, 41) befindet, wobei die mindestens eine Dampfableitungsöffnung (51) fluidisch mit dem Dampfauslasskanal (44) verbunden ist.

3. Wasserkocher (2) nach Anspruch 2, wobei der erste und der zweite Dampfströmungskreislauf (35, 38) an einem Verbindungsbereich (46) zusammentreffen, wobei der Dampfauslasskanal (44) an dem Verbindungsbereich (46) fluidisch mit dem ersten und dem zweiten Dampfströmungskreislauf (35, 38) verbunden ist.

4. Wasserkocher (2) nach Anspruch 2 oder 3, wobei der erste Dampfströmungskreislauf (35) einen Verbindungskanal (45) aufweist, der so ausgelegt ist, dass er die erste Expansionskammer (37) fluidisch mit dem Dampfauslasskanal (44) verbindet.

5. Wasserkocher (2) nach einem der Ansprüche 1 bis 4, wobei sich der erste und der zweite Dampfströmungskanal (36, 39) in Richtung eines hinteren Teils des Deckels (11) erstrecken.

6. Wasserkocher (2) nach einem der Ansprüche 1 bis 5, wobei jeder des ersten und des zweiten Dampfströmungskanals (36, 39) im Wesentlichen geradlinig ist.

7. Wasserkocher (2) nach einem der Ansprüche 1 bis 6, wobei der erste Dampfströmungskanal (36) und die erste Expansionskammer (37) Bodenwände aufweisen, die so ausgelegt sind, dass sie in Bezug auf die Horizontale geneigt sind, wenn der Behälter (4) auf einer horizontalen Oberfläche steht, und die so ausgelegt sind, dass sie Wasser, das in dem ersten Dampfströmungskanal (36) und der ersten Expansionskammer (37) enthalten ist, in Richtung der ersten Dampfeinlassöffnung (33) führen, und der zweite Dampfströmungskanal (39) und die zweite Expansionskammer (41) Bodenwände aufweisen, die so ausgelegt sind, dass sie in Bezug auf die Horizontale geneigt sind, wenn der Behälter (4) auf einer horizontalen Oberfläche steht, und die so ausgelegt sind, dass sie Wasser, das in dem zweiten Dampfströmungskanal (39) und der zweiten Expansionskammer (41) enthalten ist, in Richtung der zweiten Dampfeinlassöffnung (34) führen.

8. Wasserkocher (2) nach einem der Ansprüche 1 bis 7, wobei der Wasserkocher (2) so ausgelegt ist, dass, wenn der Wasserkocher (2) umgekippt wird und der Handgriff (8) und eine erste seitliche Seite des Behälters (4) stabil auf einer horizontalen Oberfläche ruhen, sich die erste Dampfeinlassöffnung (33) oberhalb des Wasserspiegels im Innenvolumen (5) befindet und sich die zweite Dampfeinlassöffnung (34) unterhalb des Wasserspiegels im Innenvolumen (5) befindet, und so, dass, wenn der Wasserkocher (2) umgekippt wird und der Handgriff (8) und eine zweite seitliche Seite des Behälters (4) stabil auf einer horizontalen Oberfläche ruhen, sich die erste Dampfeinlassöffnung (33) unterhalb des Wasserspiegels im Innenvolumen (5) befindet und sich die zweite Dampfeinlassöffnung (34) oberhalb des Wasserspiegels im Innenvolumen (5) befindet.

9. Wasserkocher (2) nach einem der Ansprüche 1 bis 8, wobei die erste Expansionskammer (37) eine erste Auslassöffnung (42) aufweist, die so ausgelegt ist, dass sie sich an einem hohen Punkt des ersten Dampfströmungskreislaufs (35) befindet, wenn der Wasserkocher (2) umgekippt wird und der Handgriff (8) und die zweite seitliche Seite des Behälters (4) stabil auf einer horizontalen Oberfläche aufliegen, und die zweite Expansionskammer (41) eine zweite Auslassöffnung (43) aufweist, die so ausgelegt ist, dass sie sich an einem hohen Punkt des zweiten Dampfströmungskreislaufs (38) befindet, wenn der Wasserkocher (2) umgekippt wird und der Handgriff (8) und die erste seitliche Seite des Behälters (4) stabil auf einer horizontalen Oberfläche ruhen.

10. Wasserkocher (2) nach Anspruch 9, wobei sich die erste Auslassöffnung (42) in der Nähe der zweiten Dampfeinlassöffnung (34) befindet und sich die zweite Auslassöffnung (43) in der Nähe der ersten Dampfeinlassöffnung (33) befindet.

11. Wasserkocher (2) nach einem der Ansprüche 1 bis 10, wobei der Deckel (11) ein unteres Deckelgehäuse (11.1) und ein oberes Deckelgehäuse (11.2) aufweist, die aneinander befestigt sind und den ersten und den zweiten Dampfströmungskreislauf (35, 38) begrenzen.

12. Wasserkocher (2) nach einem der Ansprüche 1 bis 11, wobei das untere Deckelgehäuse (11.1) eine Vielzahl von Sperrwänden (48) aufweist, die sich von einer Oberseite des unteren Deckelgehäuses (11.1) aus erstrecken, wobei die Sperrwände (48) den ersten und den zweiten Dampfströmungskanal (36, 39) und die erste und die zweite Expansionskammer (37, 41) teilweise begrenzen.

13. Wasserkocher (2) nach einem der Ansprüche 1 bis 12, der eine elektromechanische Steuervorrichtung aufweist, die ein Bimetallelement (52) aufweist, wobei die mindestens eine Dampfableitungsöffnung (51) so ausgelegt ist, dass sie den im Deckel (11) enthaltenen Dampf in Richtung des Bimetallelements (52) lenkt, wobei die elektromechanische Steuervorrichtung derart ausgelegt ist, dass ein Zustrom von Dampf auf das Bimetallelement (52) einen Stopp des Erhitzens des Wasserkochers (2) auslöst.

14. Wasserkocher (2) nach einem der Ansprüche 1 bis 13, der ferner eine Befestigungsvorrichtung aufweist, die so ausgelegt ist, dass sie den Deckel (11) abnehmbar am Behälter (4) befestigt.

15. Wasserkocher (2) nach einem der Ansprüche 1 bis 14, wobei der Deckel (11) einen Ausgießkanal (24) aufweist, der so ausgelegt ist, dass er Wasser, das im Innenvolumen (5) enthalten ist, in Richtung des Ausgießers (9) fördert, wobei der Wasserkocher (2) einen Verschluss (27) umfasst, der beweglich am Deckel (11) zwischen einer Verschlussposition, in der der Verschluss (27) den Ausgießkanal (24) verschließt und eine Wasserströmung durch den Ausgießkanal (24) verhindert, und einer Öffnungsposition, in der der Verschluss (27) den Ausgießkanal (24) freigibt und eine Wasserströmung durch den Ausgießkanal (24) zulässt, montiert ist.

## Claims

1. A kettle (2) comprising:
- a container (4) having a central longitudinal axis (A) configured to extend substantially vertically when the container (4) rests on a horizontal surface, the container (4) delimiting an internal volume (5) intended to contain water and in which the water is intended to be heated,
- a grip handle (8),
- a pouring spout (9) configured to be located opposite the grip handle (8) relative to the central longitudinal axis (A) of the container (4),
- a lid (11) configured to close the container (4), the lid (11) comprising a lower face (13) configured to be located facing the internal volume (5), and
- a steam discharge device (31) configured to convey, outside of the internal volume (5), steam generated in the internal volume (5) during boiling of the water contained in the internal volume (5), the steam discharge device (31) comprising a first steam intake orifice (33) and a second steam intake orifice (34) which are provided on the lid (11) and which emerge into the lower face (13) of the lid (11), the first and second steam intake orifices (33, 34) being configured to be fluidly connected to the internal volume (5) delimited by the container (4), and to be disposed on either side of a median vertical plane (P) of the kettle (2) which passes through the pouring spout (9) and the grip handle (8),
the steam discharge device (31) further comprising:
∘ a first steam flow circuit (35) delimited by the lid (11), the first steam flow circuit (35) comprising a first steam flow channel (36) fluidly connected to the first steam intake orifice (33),
∘ a second steam flow circuit (38) delimited by the lid (11), the second steam flow circuit (38) comprising a second steam flow channel (39) fluidly connected to the second steam intake orifice (34),
**characterized in that** the first steam flow circuit (35) comprises a first expansion chamber (37) fluidly connected to the first steam flow channel (36) and located downstream of the first steam flow channel (36), and **in that** the second steam flow circuit comprises a second expansion chamber (41) fluidly connected to the second steam flow channel (39) and located downstream of the second steam flow channel (39), and **in that** the steam discharge device (31) comprises at least one steam discharge opening (51) provided on the lid (11) and fluidly connected to the first and second expansion chambers (37, 41), the at least one steam discharge opening (51) being configured to allow a discharge of the steam contained in the lid (11) outside of the lid (11).

2. The kettle (2) according to claim 1, wherein the steam discharge device (31) further comprises a steam outlet channel (44) delimited by the lid (11), the steam outlet channel (44) being fluidly connected to the first and second expansion chambers (37, 41) and being located downstream of the first and second expansion chambers (37, 41), the at least one steam discharge opening (51) being fluidly connected to the steam outlet channel (44).

3. The kettle (2) according to claim 2, wherein the first and second steam flow circuits (35, 38) are joined at a junction area (46), the steam outlet channel (44) being fluidly connected to the first and second steam flow circuits (35, 38) at the junction area (46).

4. The kettle (2) according to claim 2 or 3, wherein the first steam flow circuit (35) includes a connecting channel (45) configured to fluidly connect the first expansion chamber (37) to the steam outlet channel (44).

5. The kettle (2) according to any one of claims 1 to 4, wherein the first and second steam flow channels (36, 39) extend towards a rear part of the lid (11).

6. The kettle (2) according to any one of claims 1 to 5, wherein each of the first and second steam flow channels (36, 39) is substantially rectilinear.

7. The kettle (2) according to any one of claims 1 to 6, wherein the first steam flow channel (36) and the first expansion chamber (37) include bottom walls which are configured to be inclined with respect to the horizontal when the container (4) rests on a horizontal surface and which are configured to guide water contained in the first steam flow channel (36) and the first expansion chamber (37) to the first steam intake orifice (33), and the second steam flow channel (39) and the second expansion chamber (41) include bottom walls which are configured to be inclined with respect to the horizontal when the container (4) rests on a horizontal surface and which are configured to guide water contained in the second steam flow channel (39) and the second expansion chamber (41) to the second steam intake orifice (34).

8. The kettle (2) according to any one of claims 1 to 7, wherein the kettle (2) is configured such that, when the kettle (2) is tipped over and the grip handle (8) and a first lateral side of the container (4) rest stably on a horizontal surface, the first steam intake orifice (33) is located above the water level in the internal volume (5) and the second steam intake orifice (34) is located under the water level in the internal volume (5), and so that, when the kettle (2) is tipped over and the grip handle (8) and a second lateral side of the container (4) rest stably on a horizontal surface, the first steam intake orifice (33) is located under the water level in the internal volume (5) and the second steam intake orifice (34) is located above the water level in the internal volume (5).

9. The kettle (2) according to any one of claims 1 to 8, wherein the first expansion chamber (37) includes a first outlet opening (42) configured to be located at a high point of the first steam flow circuit (35) when the kettle (2) is tipped over and the grip handle (8) and the second lateral side of the container (4) rest stably on a horizontal surface, and the second expansion chamber (41) includes a second outlet opening (43) configured to be located at a high point of the second steam flow circuit (38) when the kettle (2) is tipped over and the grip handle (8) and the first lateral side of the container (4) rest stably on a horizontal surface.

10. The kettle (2) according to claim 9, wherein the first outlet opening (42) is located close to the second steam intake orifice (34), and the second outlet opening (43) is located close to of the first steam intake orifice (33).

11. The kettle (2) according to any one of claims 1 to 10, wherein the lid (11) includes a lower lid casing (11.1) and an upper lid casing (11.2) which are fastened to each other and which delimit the first and second steam flow circuits (35, 38).

12. The kettle (2) according to any one of claims 1 to 11, wherein the lower lid casing (11.1) includes a plurality of dam walls (48) extending from an upper face of the lower lid casing (11.1), the dam walls (48) partially delimiting the first and second steam flow channels (36, 39) and the first and second expansion chambers (37, 41).

13. The kettle (2) according to any one of claims 1 to 12, which includes an electromechanical control device including a bimetallic element (52), the at least one steam discharge opening (51) being configured to direct the steam contained in the lid (11) towards the bimetallic element (52), the electromechanical control device being configured so that a steam inflow on the bimetallic element (52) triggers a stop of the heating of the kettle (2).

14. The kettle (2) according to any one of claims 1 to 13, which further includes a fastening device configured to removably fasten the lid (11) to the container (4).

15. The kettle (2) according to any one of claims 1 to 14, wherein the lid (11) includes a pouring passage (24) configured to convey water contained in the internal volume (5) towards the pouring spout (9), the kettle (2) comprising a obturator (27) movably mounted on the lid (11) between a closed position in which the obturator (27) closes the pouring passage (24) and prevents a water flow through the pouring passage (24) and an open position in which the obturator (27) releases the pouring passage (24) and allows a water flow through the pouring passage (24)
